# EUROPÄISCHE PATENTSCHRIFT

(11) **EP 0 477 433 B1**
(45) Veröffentlichungstag und Bekanntmachung des Hinweises auf die Patenterteilung: **06.04.1994**
(21) Anmeldenummer: 90123715.6
(22) Anmeldetag: 10.12.1990
(51) Int. Cl.: C09C 1/64, C08F 292/00, C09C 1/62, C09C 3/12, C09D 5/00, C08K 9/06

(54) **Kunstharzbeschichtete Metallpigmente, Verfahren zu ihrer Herstellung und ihre Verwendung**
Metallic pigments coated with synthetic resin, process for manufacturing them and their use
Pigments métalliques revêtus de résine synthétique, procédé de fabrication et utilisation

(30) Priorität: 28.09.1990 DE 4030727
(43) Veröffentlichungstag der Anmeldung: 01.04.1992
(73) Patentinhaber: ECKART-WERKE STANDARD BRONZEPULVER-WERKE CARL ECKART GMBH & CO., D-90763 Fürth (DE)
(72) Erfinder: Reisser, Wolfgang, Dr. Dipl.-Chem., W-8563 Schnaittach (DE); Sommer, Günter, Dr. Dipl.-Chem., W-8560 Lauf (DE)
(74) Vertreter: LOUIS, PÖHLAU, LOHRENTZ & SEGETH

(56) Entgegenhaltungen:
- EP-A- 0 142 784
- EP-A- 0 206 140
- EP-A- 0 263 428
- DE-A- 3 630 356
- PATENT ABSTRACTS OF JAPAN vol. 13, no. 3 (C-557)[3351], 6. Januar 1989; & JP-A-63 215 704

## Beschreibung

Die Erfindung beschreibt neue Metallpigmente, insbesondere auf Aluminiumbasis, mit einer vergleichsweise hohen Beständigkeit gegen Wasser und Chemikalien, die sich deswegen insbesondere zur Herstellung von Metallic-Lacken und -Druckfarben auf Wasserbasis eignen.

Wässrige Lack- und Druckfarbensysteme gewinnen aus Umweltschutzgründen ständig an Bedeutung. In solchen Systemen können Metallpigmente mit einer reaktiven Oberfläche nicht oder nur begrenzt eingesetzt werden, weil diese sich im Laufe der Zeit chemisch verändert, was im allgemeinen zur Beeinträchtigung der optischen Eigenschaften der Metallpigmentteilchen (Glanz, Brillanz) führt. Dies gilt insbesondere für Aluminiumpigmente, die in Kontakt mit Wasser unter Bildung von Wasserstoff reagieren, insbesondere in sauren oder alkalischen Medien. Eine alkalische Umgebung für die Metallpigmentteilchen liegt oft in den basisch eingestellten wässrigen Beschichtungszusammensetzungen vor.

Es sind eine Reihe von Vorschlägen zur Stabilisierung der Oberfläche von Metallpigmenten, insbesondere solchen auf Aluminiumbasis, gegen den Angriff von Chemikalien und Wasser bekannt, vor allem zu dem Zwecke, solche Pigmente in wässrigen, Bindemittel enthaltenden Lack- und Farbenzusammensetzungen verwenden zu können. Dabei betrifft eine Vorschlagsgattung die Inhibierung der Reaktion mit Wasser durch Adsorption von Korrosionsinhibitoren auf den Pigmentoberflächen. Geeignete Inhibitoren für diesen Zweck sind spezielle Borate, Phosphate, Vanadate, organische Phosphorsäureverbindungen (Ester) und gewisse Fettsäuren in monomerer oder polymerer (oligomerer) Form (z.B. Dimersäure).

Auf diesem Wege lässt sich jedoch keine, insbesondere für die Verwendung der Metallpigmente in wässrigen Zusammensetzungen ausreichende Passivierung erreichen, ganz abgesehen davon, dass die optischen Eigenschaften der Pigmente durch die Behandlung mit solchen Korrosionsinhibitoren stark beeinträchtigt werden.

Eine wirksame passivierende Behandlung von Aluminiumpigmenten wird in der DE-OS 36 36 183 beschrieben. Dabei wirkt Chromsäure auf die Pigmentoberfläche in solcher Weise ein, dass unter Beibehaltung der guten optischen Eigenschaften des Metallpulvers eine hohe Gasungsstabilität, auch in Gegenwart von Wasser, erreicht wird, so dass sich solche chromsäurebehandelten Aluminiumpigmente zur Herstellung hochwertiger und lagerstabiler Beschichtungszusammensetzungen (z.B. Lacke, Druckfarben, Anstrichmittel) eignen. Die Verwendung toxischer Chromsäure wirft jedoch verschiedene ökologische Probleme auf. Auch ist der Gehalt der Pigmente an Chromverbindungen in manchen Fällen unerwünscht.

Eine andere Gattung von bekannten Vorschlägen zur Herabsetzung der Reaktivität von Aluminiumpigmenten ist auf die Beschichtung der Pigmente mit schützenden Kunstharzüberzügen gerichtet. Voraussetzung für eine wirksame Stabilisierung der Pigmente gegen chemische und damit auch physikalische Veränderungen ist ein geschlossener und gut haftender Überzug auf der Pigmentoberfläche. Eine solche Haftung kann nur dann erreicht werden, wenn das organische Material mittels pigmentaffinen Haftgruppen, beispielsweise Carboxylat- oder Phosphatgruppen, auf den Pigmentteilchen chemisch gebunden (chemisorbiert) wird.

Zu diesem Zwecke wird in den EP-A1 0 170 474 und 0 319 971 eine Pigmentbeschichtung mit phosphorsäuremodifizierten Harzen vorgeschlagen. In diese Richtung geht auch das in der DE-OS 36 30 356 beschriebene zweistufige Verfahren. Hierbei werden die Pigmente zuerst mit einer als Haftvermittler wirkenden, ethylenisch ungesättigten Carbonsäure und/oder einem ethylenisch ungesättigten Phosphorsäure-mono- oder -diester überzogen, wonach durch Zugabe eines Monomers mit mindestens 3 ethylenischen Doppelbindungen durch radikalische Polymerisation ein Kunstharzüberzug mit dreidimensionaler Struktur gebildet wird. Diese Beschichtungsverfahren, bei dem die Harze über Carboxylat- und/oder Phosphatgruppen auf der Pigmentoberfläche haften, führt zwar zu Aluminiumpigmenten, die für viele Zwecke eine ausreichende Gasungsstabilität in Wasser aufweisen. In den oft basisch eingestellten wässrigen Lack- und Druckfarbensystemen ist jedoch die Gasungsstabilität unbefriedigend, weil die Carboxylat- bzw. Phosphathaftgruppen in solchen Systemen nicht ausreichend hydrolysestabil sind, so dass sich der Kunstharzüberzug nach relativ kurzer Lagerzeit von der Pigmentoberfläche zumindest partiell ablöst.

Die US-PS 4.213.886 beschreibt die Herstellung eines kunstharzbeschichteten Aluminiumpigments, bei dem ein die Aussenbeschichtung bildendes Acrylatharz (auf der Basis eines Alkylacrylats oder Alkylmethacrylats) über Silangruppen auf der Pigmentoberfläche gebunden ist. Dabei wird zunächst ein ethylenisch ungesättigtes Silan auf dem Pigment adsorbiert, wonach die in dem Silan vorliegenden Doppelbindungen mit einem Acrylmonomeren radikalisch zu einem Acrylatüberzug polymerisiert werden. Auch mit nach diesem Verfahren beschichteten Pigmenten lassen sich keine ausreichend lagerstabilen, wässrigen Lack- oder Druckfarben herstellen. Abgesehen davon, dass bei diesen Pigmenten die durch die Silanbehandlung vermittelte Haftung des Kunstharzüberzuges auf dem Pigment unbefriedigend ist, scheint auch die Struktur des Acrylatüberzuges gegenüber dem Eindringen von Wasser und Chemikalien nicht ausreichend dicht zu sein. In der genannten US-PS ist zwar offenbart, dass mit dem Siliziumatom des Silans eine hydrolysierbare Gruppe verbunden sein soll und dass ein Zusammenhang zwischen der Hydrolyse der Silane und dem pH-Wert der Silanlösung besteht. Spezielle Angaben für eine zielgerichtete Durchführung der Hydrolyse sind jedoch in der US-Patentschrift nicht enthalten.

Ausgehend von dem zuletzt genannten Stand der Technik betrifft die vorliegende Erfindung zunächst ein neues, kunstharzbeschichtetes Metallpigment, insbesondere auf Aluminiumbasis, bei dem die Haftvermittlung zwischen der Oberfläche der Metallteilchen und dem Kunstharzüberzug ebenfalls über eine siliziumorganische Verbindung zustandekommt. Die Erfindungsaufgabe ist darin zu sehen, dass ein solches kunstharzüberzogenes Metallpigment so weiterentwickelt wird, dass es aufgrund einer verbesserten Haftung des Kunstharzüberzuges auf dem Pigment und auch wegen der dichten Struktur des Kunstharzüberzuges eine hohe chemische Beständigkeit aufweist und sich deshalb im besonderen Masse zur Herstellung von lagerstabilen, wässrigen Metallanstrichmitteln eignet.

Die Lösung der Erfindungsaufgabe besteht darin, dass die Oberfläche der Pigmentteilchen mit einer an dieser kovalent gebundenen Siloxanbeschichtung versehen ist, an die ein dreidimensional vernetzter Kunstharzüberzug kovalent gebunden ist. Zur Herstellung eines solchen Metallpigments kann erfindungsgemäss so vorgegangen werden, dass die Oberfläche der Pigmentteilchen in einer ersten Stufe mit einer zu einem Siloxan umsetzbaren siliziumorganischen Verbindung (Silanabkömmling) behandelt wird, die mindestens eine organische, reaktive Gruppierung enthält, hiernach die siliziumorganische Belegung der Pigmentteilchen in einer nächsten Stufe unter Verwendung eines Hydrolysekatalysators und unter Zugabe von Wasser durch Hydrolyse und anschliessende Kondensation in eine Siloxanbeschichtung umgewandelt und diese in einer weiteren Stufe mit einer mit der vorerwähnten reaktiven Gruppierung umsetzbaren, niedermolekularen Verbindung bzw. Verbindungen unter solchen Bedingungen zur Reaktion gebracht wird, dass sich ein dreidimensional vernetzter Kunstharzüberzug bildet.

Es hat sich gezeigt, dass eine besonders gute Haftung des Kunstharzüberzuges auf den Pigmentteilchen dann erreicht wird, wenn die Hydrolyse und Kondensation der in der ersten Stufe eingesetzten und an der Pigmentoberfläche adsorbierten Silanverbindung zu der Siloxanbeschichtung möglichst quantitativ erfolgt. Die Umwandlung des Silans zu dem Siloxan wird deshalb vorzugsweise mit einer Wassermenge durchgeführt, die mindestens der Menge entspricht, die stöchiometrisch für eine solche vollständige Umwandlung erforderlich ist. Als Hydrolysekatalysator kommen vorzugsweise Verbindungen aus der Gruppe Phosphonsäuren und Phosphorsäuren, beispielsweise 2-Carboxyethanphosphonsäure, 2-Aminoethanphosphonsäure und Octanphosphonsäure in Betracht. Hierbei ergibt sich der zusätzliche Vorteil, dass die Phosphor- und Phosphonsäuren nicht nur als Katalysator wirken, sondern auch in der Lage sind, die Aluminiumoberfläche zusätzlich zu stabilisieren, falls der Siloxanüberzug Fehlstellen aufweisen sollte. Als Hydrolysekatalysatoren können aber auch Säuren oder Basen wie beispielsweise Essigsäure oder Triethylamin eingesetzt werden. Wenn im Zusammenhang mit dem erfindungsgemässen Verfahren von der Verwendung eines Hydrolysekatalysators die Rede ist, dann schliesst dies auch den Fall ein, dass die für die Belegung der Pigmentoberfläche eingesetzte siliziumorganische Verbindung eine Gruppierung aufweist, die bei der Umwandlung in die Siloxanbeschichtung als Hydrolysekatalysator wirksam ist, so dass sich die gesonderte Zugabe eines solchen Katalysators erübrigt. So findet beim Einsatz von aminofunktionellen Silanen mit Wasser eine autokatalytische Umsetzung zu Siloxanen statt.

Die Menge der für die Belegung der Metallteilchen verwendeten siliziumorganischen Verbindung soll mindestens so gross sein, dass sich eine monomolekulare Schicht auf den Teilchen ausbilden kann. Hierbei ist die Grösse und Form der Metallteilchen zu berücksichtigen. Diese liegen im allgemeinen in Form von Schuppen bzw. Blättchen vor.

In den Unteransprüchen sind die für die Anwendung der Erfindung beispielsweise bzw. vorzugsweise in Betracht gezogenen siliziumorganischen Verbindungen ihrer Gattung nach angegeben. In diesem Rahmen seien als spezielle siliziumorganische Verbindungen genannt:
3-Aminopropyl-trimethoxysilan, N-Methyl-3-aminopropyltrimethoxysilan, 3-Aminopropyl-triethoxysilan, 3-Aminopropyl-tris(2methoxy-ethoxy-ethoxy-silan), N-Aminoethyl-3-aminopropyl-trimethoxysilan, 3-Methacryloxypropyl-trimethoxysilan, 3-Acryloxypropyltrimethoxysilan, 3-Glycidyloxypropyl-trimethoxysilan, 3-Mercaptopropyltrimethoxysilan, 3-Mercaptopropyltriethoxysilan, 3-Mercaptopropylmethyldimethoxysilan, Vinyltrichlorsilan, Vinyltrimethoxysilan, Vinyltriethoxysilan und Vinyl-tris (2-methoxyethoxy)silan. Diese Silane können allein oder in Kombination verwendet werden.

Die erfindungsgemäss eingesetzten siliziumorganischen Verbindungen wie auch die aus ihnen durch Hydrolyse und Kondensation hervorgehenden Siloxane besitzen reaktive Gruppen, die mit niedermolekularen, als sogenannte Vernetzer wirkenden Verbindungen unter solchen Bedingungen zur Reaktion gebracht werden können, dass sich ein dreidimensional vernetzter Kunstharzüberzug bildet. Dabei kommt die kovalente Bindung des Kunstharzüberzuges an die als Haftvermittler wirkende Siloxanbeschichtung zustande. Als mit der Siloxanbeschichtung umsetzbare niedermolekulare Verbindungen kommen vorzugsweise solche in Betracht, die in Bezug auf eine Polymerisation, Polykondensation oder Polyaddition mindestens 3 funktionelle Gruppen aufweisen; hierbei handelt es sich vorzugsweise um ethylenische Doppelbindungen, wie sie beispielsweise in Allylgruppen vorkommen.

In der nachfolgenden Tabelle sind Beispiele für erfindungsgemäss anwendbare Kombinationen von reaktiven Gruppierungen an dem organischen Rest der eingesetzten siliziumorganischen Verbindungen und von funktionellen Gruppierungen an den mit der Siloxanbeschichtung umgesetzten niedermolekularen Verbindungen (Vernetzer) angegeben.

| Reaktive Gruppierung am organischen Rest der siliziumorganischen Verbindung | Funktionelle Gruppierungen an der niedermolekularen Verbindung |
|---|---|
| Amino | Epoxi, Isocyanat Phenol |
| Epoxi | Amin |
| Acryl, Methacryl,Vinyl | Acryl, Methacryl, Vinyl, Allyl |
| Mercapto | Olefin, Isocyanat, Epoxi |

Als von der Erfindung bevorzugte niedermolekulare Verbindungen bzw. Vernetzer seien genannt:
Trimethylolpropantrimethacrylat, Trimethylolpropantriacrylat, Tetramethylolmethantriacrylat, Tetramethylolmethantetraacrylat und oligomere Polyallylglycidylether.

Aluminiumpigmente mit einer besonders hohen Stabilität gegen Wasser und Chemikalien erhält man, wenn die Pigmentoberfläche zuerst mit einer acryl-, methacryl- oder vinylfunktionellen Siloxanschicht überzogen wird, die dann in einer radikalischen Polymerisation durch Zugabe eines Radikalstarters und einer Verbindung, die mindestens 3 reaktive Acryl-, Methacryl-, Vinyl- oder Allylgruppen enthält, mit dem Kunstharzüberzug versehen wird. Dabei kann sich die Vernetzung je nach Zahl und Art der reaktiven Gruppierung der Siloxanbeschichtung bis in diese hineinerstrecken.

Als erfindungsgemäss einsetzbare Radikalstarter kommen die für diesen Zweck bekannten Peroxide und Azo-Verbindungen, beispielsweise 2,2-Azobis (2-methylpropannitril) in Betracht.

Zur praxisnahen Stabilitätsprüfung der erfindungsgemäss beschichteten Aluminiumpigmente gegen Wasser und Chemikalien dient der sogenannte "Kochtest". Bei diesem Test werden 1,5 g Aluminiumpaste in 10 g Butylglycol vordispergiert und dann zu 150 g siedendem Wasser in eine gasdicht verschliessbare Apparatur gegossen. Als Mass für die Stabilität wird die Zeit gemessen, in der durch Reaktion des Aluminiumpigments mit dem Wasser 400 ml Wasserstoff entwickelt werden. Während konventionelle, d.h. nicht stabilisierte Aluminiumpigmente beim Kochtest in wenigen Minuten abreagieren, erreichen die erfindungsgemäss beschichteten Pigmente Kochtestzeiten von mehr als 10 h.

Die erfindungsgemässen Pigmente eignen sich aufgrund der Verträglichkeit ihres Harzüberzuges mit anderen Kunstharzen und der elektrisch isolierenden Eigenschaften ihres Harzüberzuges auch sehr gut für die Kunststoffeinfärbung bzw. zur Verwendung in Nass- und Pulverlacken für die elektrostatische Lackierung. Falls die Pigmentzubereitung in Pastenform vorliegt und zur Herstellung von Pulverlacken verwendet werden soll, muss natürlich zunächst das in der Paste enthaltene Wasser oder organische Lösungsmittel durch Trocknen entfernt werden.

Die Erfindung wird durch nachstehend beschriebene Beispiele noch näher erläutert:

### Beispiel 1

190 g einer Aluminiumpigmentpaste mit einem Metallgehalt von 65% und einer mittleren Teilchengrösse von 18 µm (Stapa Metallux 8154 der Eckart-Werke werden in 600 g Testbenzin dispergiert und auf 120°C erhitzt. Man gibt zuerst 3,8 g 3-Methacryloxy-propyl-trimethoxysilan in 10 g Testbenzin und anschliessend 0,15 g Vinylphosphonsäure in 10 g Testbenzin, 0,15 g Wasser und 2,5 g 2-Butanol zu und rührt noch 1 h bei 120°C. Hiernach werden zuerst 6 g Trimethylolpropantrimethacrylat in 10 g Testbenzin und anschliessend während 30 min eine Aufschlämmung von 0,2 g 2,2-Azobis (2-methylpropannitril) in 5 g Testbenzin zugegeben. Danach rührt man noch 5 h bei 120°C und lässt dann 2 h unter Rühren abkühlen. Das beschichtete Pigment wird mittels einer Nutsche von der Reaktionsmischung abgetrennt und auf einen Festkörpergehalt von ca. 70% gebracht. Durch Zugabe von Testbenzin wird eine Pigmentpaste mit 65% Festkörperanteil hergestellt, die im Kochtest eine Zeit von mehr als 24 h erreicht.

### Beispiel 2

128 g der in Beispiel 1 eingesetzten Aluminiumpigmentpaste werden in 520 g Testbenzin dispergiert und auf 120°C erhitzt. Man gibt 2,5 g 3-Methacryloxypropyltrimethoxysilan in 10 g Testbenzin und anschliessend 0,1 g Octanphosphonsäure in 10 g Testbenzin, 0,1 g Wasser und 3,5 g 2-Butanol zu und rührt noch 1 h bei 120°C. Hiernach werden zunächst 4,7 g Trimethylolpropantrimethacrylat in 10 g Testbenzin und anschliessend während 30 min eine Aufschlämmung von 1,0 g 2,2-Azobis (2-methylpropannitril) in 5 g Testbenzin zugegeben. Danach rührt man noch 5 h bei 120°C und lässt dann 2 h unter Rühren abkühlen. Das beschichtete Pigment wird mittels einer Nutsche von der Reaktionslösung abgetrennt und auf einen Festkörpergehalt von ca. 70% gebracht. Durch Zugabe von Testbenzin wird eine Pigmentpaste mit 65% Festkörperanteil hergestellt, die im Kochtest eine Zeit von mehr als 20 h erreicht.

### Beispiel 3

Gemäss der Arbeitsweise des Beispiels 2 wurde eine beschichtete Aluminiumpigmentpaste unter Verwendung von 0,1 g 2-Carboxyethanphosphonsäure anstelle von 0,1 g Octanphosphonsäure hergestellt. Die Pigmentpaste erreicht im Kochtest eine Zeit von mehr als 21 h.

### Beispiel 4

Gemäss der Arbeitsweise des Beispiels 2 wurde eine beschichtete Aluminiumpigmentpaste unter Verwendung von 0,1 g 2-Aminoethanphosphonsäure anstelle von Octanphosphonsäure hergestellt. Die Pigmentpaste erreicht im Kochtest eine Zeit von mehr als 21 h.

### Beispiel 5

Gemäss der Arbeitsweise des Beispiels 2 wurde eine beschichtete Aluminiumpigmentpaste unter Verwendung von 0,1 g Vinylphosphonsäure anstelle von Octanphosphonsäure und unter Verwendung von 4,7 g Trimethylolpropantriacrylat anstelle von Trimethylolpropantrimethacrylat hergestellt. Die Pigmentpaste erreicht im Kochtest eine Zeit von mehr als 19 h.

### Beispiel 6

128 g der in Beispiel 1 eingesetzten Aluminiumpigmentpaste werden in 520 g Testbenzin dispergiert und auf 120°C erhitzt. Man gibt zuerst 2,5 g 3-Methacryloxypropyltrimethoxysilan in 10 g Testbenzin und anschliessend 0,1 g Vinylphosphonsäure in 10 g Testbenzin, 0,1 g Wasser und 2,5 g 2-Butanol zu und rührt noch 1 h bei 120°C. Hiernach werden zunächst 10 g Trimethylolpropantrimethacrylat in 10 g Testbenzin zugegeben und anschliessend während 30 min eine Aufschlämmung von 1,0 g 2,2-Azobis (2-methylpropannitril) in 5 g Testbenzin. Danach rührt man noch 5 h bei 120°C und lässt dann 2 h unter Rühren abkühlen. Das beschichtete Pigment wird mittels einer Nutsche von der Reaktionslösung abgetrennt und auf einen Festkörpergehalt von ca. 70% gebracht. Durch Zugabe von Testbenzin wird eine Pigmentpaste mit einem Festkörpergehalt von 65% hergestellt, die im Kochtest eine Zeit von mehr als 20 h erreicht.

### Beispiel 7

Gemäss der Arbeitsweise des Beispiels 6 wurde eine beschichtete Aluminiumpigmentpaste unter Verwendung von 10 g eines handelsüblichen Polyallylglycidylethers (XI 100 von Monsanto ) anstelle von 10 g Trimethylolpropantrimethacrylat hergestellt. Die Pigmentpaste erreicht im Kochtest eine Zeit von mehr als 10 h.

## Patentansprüche

1. Kunstharzbeschichtetes Metallpigment, insbesondere Aluminiumpulver,
**gekennzeichnet durch**
eine an der Oberfläche der Pulverteilchen kovalent gebundene Siloxanbeschichtung, an der ein dreidimensional vernetzter Kunstharzüberzug kovalent gebunden ist.

2. Metallpigment nach Anspruch 1,
**dadurch gekennzeichnet,**
dass die Siloxanbeschichtung eine Mindestdicke aufweist, die einer monomolekularen Belegung der Oberfläche der Pigmentteilchen entspricht.

3. Metallpigment nach einem oder beiden der vorhergehenden Ansprüche,
**dadurch gekennzeichnet,**
dass der Kunstharzüberzug aus einer niedermolekularen Verbindung bzw. Verbindungen erhältlich ist, die für eine Polymerisation, Polyaddition oder Polykondensation mindestens 3 funktionelle Gruppierungen aufweisen.

4. Metallpigment nach einem oder mehreren der vorhergehenden Ansprüche,
**dadurch gekennzeichnet,**
dass die kovalente Bindung des Kunstharzüberzuges an der Siloxanbeschichtung durch Umsetzung eines organischen, reaktiven Rests bzw. Reste der Siloxanmoleküle mit der den Kunstharzüberzug bildenden niedermolekularen Verbindung bzw. Verbindungen erhältlich ist.

5. Metallpigment nach Anspruch 4,
**dadurch gekennzeichnet,**
dass der organische Rest der Siloxanmoleküle mindestens eine für eine Polymerisation, Polyaddition oder Polykondensation reaktive Gruppierung aufweist.

6. Verfahren zur Herstellung eines Metallpigments nach einem oder mehreren der vorhergehenden Ansprüche,
**dadurch gekennzeichnet,**
dass die Oberfläche der Pigmentteilchen in einer ersten Stufe mit einer zu einem Siloxan umsetzbaren, siliziumorganischen Verbindung behandelt wird, die mindestens eine organische, reaktive Gruppierung enthält, hiernach die siliziumorganische Belegung der Pigmentteilchen in einer nächsten Stufe unter Verwendung eines Hydrolysekatalysators und unter Zugabe von Wasser durch Hydrolyse und anschliessende Kondensation in eine Siloxanbeschichtung umgewandelt und diese in einer weiteren Stufe mit einer mit der vorerwähnten reaktiven Gruppierung umsetzbaren, niedermolekularen Verbindung bzw. Verbindungen unter solchen Bedingungen zur Reaktion gebracht wird, dass sich ein dreidimensional vernetzter Kunstharzüberzug bildet.

7. Verfahren nach Anspruch 6,
**dadurch gekennzeichnet,**
dass die Menge der in der ersten Stufe eingesetzten siliziumorganischen Verbindung unter Berücksichtigung der Grösse und Form der Pigmentteilchen so bemessen wird, dass sich mindestens eine monomolekulare Belegung auf der Pigmentoberfläche ausbildet.

8. Verfahren nach einem oder beiden der vorhergehenden Ansprüche 6 und 7,
**dadurch gekennzeichnet,**
dass die Hydrolyse mit einer Wassermenge durchgeführt wird, die mindestens der Menge entspricht, die stöchiometrisch für eine vollständige Umwandlung der siliziumorganischen Belegung in die Siloxanbeschichtung erforderlich ist.

9. Verfahren nach einem oder mehreren der vorhergehenden Ansprüche 6 bis 8,
**dadurch gekennzeichnet,**
dass als Hydrolysekatalysator eine Verbindung aus der Gruppe der Phosphonsäuren und Phosphorsäuren verwendet wird.

10. Verfahren nach Anspruch 9,
**dadurch gekennzeichnet,**
dass als Hydrolysekatalysator eine Verbindung aus der Gruppe 2-Carboxyethanphosphonsäure, 2-Aminoethanphosphonsäure und Octanphosphonsäure verwendet wird.

11. Verfahren nach einem oder mehreren der vorhergehenden Ansprüche 6 bis 10,
**dadurch gekennzeichnet,**
dass die reaktive Gruppierung der siliziumorganischen Verbindung durch Polymerisation, Polyaddition oder Polykondensation mit der den Kunstharzüberzug bildenden niedermolekularen Verbindung bzw. Verbindungen umgesetzt wird.

12. Verfahren nach einem oder mehreren der vorhergehenden Ansprüche 6 bis 11,
**dadurch gekennzeichnet,**
dass für die Umsetzung mit der reaktiven Gruppierung der siliziumorganischen Verbindung eine niedermolekulare Verbindung verwendet wird, die für eine Polymerisation, Polyaddition oder Polykondensation mindestens 3 funktionelle Gruppierungen aufweist.

13. Verfahren nach Anspruch 12,
**dadurch gekennzeichnet,**
dass die niedermolekulare Verbindung mindestens 3 ethylenische Doppelbindungen aufweist.

14. Verfahren nach Anspruch 13,
**dadurch gekennzeichnet**,
dass die ethylenischen Doppelbindungen durch Acryl- und/oder Methacrylgruppen gebildet werden.

15. Verfahren nach Anspruch 13,
**dadurch gekennzeichnet,**
dass die ethylenischen Doppelbindungen durch Allylgruppen gebildet werden.

16. Verfahren nach einem oder mehreren der vorhergehenden Ansprüche 6 bis 15,
**dadurch gekennzeichnet,**
dass die in der ersten Stufe eingesetzte siliziumorganische Verbindung die Formel R₄₋ₙSiXₙ aufweist, worin n die Zahl 2 oder 3 bedeutet und R für einen organischen Rest mit der reaktiven Gruppierung und X für einen hydrolysierbaren Substituenten oder eine hydrolysierbare Gruppierung steht.

17. Verfahren nach Anspruch 11 und 16,
**dadurch gekennzeichnet,**
dass der organische Rest R mindestens eine ethylenische Doppelbindung, eine Amino-, Mercapto-, Epoxi-, Hydroxyl- oder Isocyanatgruppe enthält.

18. Verfahren nach Anspruch 17,
**dadurch gekennzeichnet,**
dass der organische Rest R eine Acryl- und/oder Methacrylgruppe enthält.

19. Verfahren nach Anspruch 16,
**dadurch gekennzeichnet,**
dass X für Cl-, CH₃O-, C₂H₅O-, CH₃COO-, CH₃O (C₂H₄O)₂- oder CH₃OC₂H₄O- steht.

20. Verfahren nach Anspruch 13,
**dadurch gekennzeichnet,**
dass die niedermolekulare Verbindung aus der folgenden Gruppe ausgewählt wird:
Trimethylolpropantrimethacrylat, Trimethylolpropantriacrylat, Tetramethylolmethantriacrylat, Tetramethylolmethantetraacrylat und Polylallylglycidylether.

21. Verwendung eines Metallpulvers nach einem oder mehreren der vorhergehenden Ansprüche 1 bis 5 oder erhältlich nach einem Verfahren gemäss der Ansprüche 6 bis 20 in Lack-, Farb- und Anstrichsmittelzusammensetzungen auf Wasserbasis.

22. Verwendung eines Metallpulvers nach einem oder mehreren der vorhergehenden Ansprüche 1 bis 5 oder erhältlich nach einem Verfahren gemäss der Ansprüche 6 bis 20 in Nass- und Pulverlacken für die elektrostatische Lackierung.

23. Verwendung eines Metallpulvers nach einem oder mehreren der vorhergehenden Ansprüche 1 bis 5 oder erhältlich nach einem Verfahren gemäss der Ansprüche 6 bis 20 zur Einfärbung von Kunststoffen.

## Claims

1. Synthetic-resin-coated metal pigment, especially aluminium powder, characterized by a siloxane coating which is covalently bonded to the surface of the powder particles and to which a three-dimensionally crosslinked synthetic-resin coating is covalently bonded.

2. Metal pigment according to Claim 1, characterized in that the siloxane coating has a minimum thickness corresponding to a monomolecular covering of the surface of the pigment particles.

3. Metal pigment according to one or both of the preceding claims, characterized in that the synthetic-resin coating is obtainable from a low molecular weight compound or compounds which contains or contain at least 3 functional groups for addition polymerization or condensation polymerization.

4. Metal pigment according to one or more of the preceding claims, characterized in that the covalent bonding of the synthetic-resin coating on the siloxane coating is obtainable by reacting an organic reactive radical or radicals of the siloxane molecules with the low molecular weight compound or compounds forming the synthetic-resin coating.

5. Metal pigment according to Claim 4, characterized in that the organic radical of the siloxane molecules contains at least one group which is reactive for addition polymerization or condensation polymerization.

6. Process for the preparation of a metal pigment according to one or more of the preceding claims, characterized in that the surface of the pigment particles is treated in a first stage with an organosilicon compound which can be converted into a siloxane and which contains at least one organic reactive group, subsequently, in a following stage, the organosilicon covering of the pigment particles is converted using a hydrolysis catalyst and with the addition of water, by hydrolysis and subsequent condensation, into a siloxane coating which is reacted, in a further stage, with a low molecular weight compound or compounds which can be reacted with the aforementioned reactive group, under conditions such that a three-dimensionally crosslinked synthetic-resin coating is formed.

7. Process according to Claim 6, characterized in that the quantity of the organosilicon compound employed in the first stage, taking into account the size and shape of the pigment particles, is such that at least one monomolecular covering forms on the pigment surface.

8. Process according to one or both of the preceding Claims 6 and 7, characterized in that the hydrolysis is carried out using a quantity of water which corresponds at least to the quantity stoichiometrically required for a complete conversion of the organosilicon covering into the siloxane coating.

9. Process according to one or more of the preceding Claims 6 to 8, characterized in that the hydrolysis catalyst used is a compound from the group consisting of phosphonic acids and phosphoric acids.

10. Process according to Claim 9, characterized in that the hydrolysis catalyst used is a compound from the group consisting of 2-carboxyethanephosphonic acid, 2-aminoethanephosphonic acid and octanephosphonic acid.

11. Process according to one or more of the preceding Claims 6 to 10, characterized in that the reactive group of the organosilicon compound is reacted by addition polymerization or condensation polymerization with the low molecular weight compound or compounds forming the synthetic-resin coating.

12. Process according to one or more of the preceding Claims 6 to 11, characterized in that the low molecular weight compound used for the reaction with the reactive group contains at least 3 functional groups for addition polymerization or condensation polymerization.

13. Process according to Claim 12, characterized in that the low molecular weight compound contains at least 3 ethylenic double bonds.

14. Process according to Claim 13, characterized in that the ethylenic double bonds are formed by acrylic and/or methacrylic groups.

15. Process according to Claim 13, characterized in that the ethylenic double bonds are formed by allyl groups.

16. Process according to one or more of the preceding Claims 6 to 15, characterized in that the organosilicon compound employed in the first stage has the formula R₄₋ₙSiXₙ, in which n denotes the number 2 or 3 and R represents an organic radical containing the reactive group and X represents a hydrolysable substituent or a hydrolysable group.

17. Process according to Claim 11 and 16, characterized in that the organic radical R contains at least one ethylenic double bond, an amino, mercapto, epoxy, hydroxyl or isocyanate group.

18. Process according to Claim 17, characterized in that the organic radical R contains an acrylic and/or methacrylic group.

19. Process according to Claim 16, characterized in that X represents Cl-, CH₃O-, C₂H₅O-, CH₃COO-, CH₃O(C₂H₄O)₂-or CH₃OC₂H₄O-.

20. Process according to Claim 13, characterized in that the low molecular weight compound is selected from the following group: trimethylolpropane trimethacrylate, trimethylolpropane triacrylate, tetramethylolmethane triacrylate, tetramethylolmethane tetraacrylate and polyallyl glycidyl ether.

21. Use of a metal powder according to one or more of the preceding Claims 1 to 5 or obtainable by a process according to Claims 6 to 20 in water-based paint, colorant and coating compositions.

22. Use of a metal powder according to one or more of the preceding Claims 1 to 5 or obtainable by a process according to Claims 6 to 20 in wet coatings and powder coatings for electrostatic coating.

23. Use of a metal powder according to one or more of the preceding Claims 1 to 5 or obtainable by a process according to Claims 6 to 20 for the colouring of plastics.

## Revendications

1. Pigment métallique, en particulier aluminium pulvérulent, revêtu de résine synthétique, caractérisé par une couche de siloxane liée par covalence avec la surface des particules de poudre, sur laquelle un revêtement de résine synthétique réticulée tridimensionnelle est liée par covalence.

2. Pigment métallique selon la revendication 1, caractérisé en ce que la couche de siloxane présente une épaisseur minimale, qui correspond à une couverture monomoléculaire de la surface des particules de pigment.

3. Pigment métallique selon l'une des revendications précédentes, caractérisé en ce que le revêtement de résine synthétique peut être obtenu à partir d'un ou de plusieurs composé(s) à faible poids moléculaire qui présente(nt) au moins trois groupements fonctionnels disponibles pour une polymérisation, une polyaddition ou une polycondensation.

4. Pigment métallique selon l'une des revendications précédentes, caractérisé en ce que la liaison covalente de la couche de résine synthétique sur le revêtement de siloxane peut être obtenue par transformation d'un reste ou plusieurs reste(s) réactif(s) organique(s) ou reste(s) de molécules de siloxane avec le ou les composé(s) à faible poids moléculaire formant la couche de résine synthétique.

5. Pigment métallique selon la revendication 4, caractérisé en ce que le reste organique de la molécule de siloxane présente au moins un groupement réactif disponible pour une polymérisation, une polyaddition ou une polycondensation.

6. Procédé pour la réalisation d'un pigment métallique selon l'une des revendications précédentes, caractérisé en ce que la surface des particules de pigment est traitée dans une première étape avec un composé organique de silicium, convertible en siloxane, ledit composé comprenant au moins un groupement organique réactif, après quoi le revêtement de composé organique de silicium des particules pigmentaires est transformé en une couche de siloxane dans une seconde étape par utilisation d'un catalysateur d'hydrolyse, par addition d'eau, par hydrolyse puis par condensation, la couche de siloxane étant mise en réaction dans une dernière étape avec un ou plusieurs composé(s) à bas poids moléculaire et convertible(s) doté(s) dudit groupement réactif, afin de former un revêtement réticulé tridimensionnel.

7. Procédé selon la revendication 6, caractérisé en ce que la quantité du composé organique de silicium employé au cours de la première étape est contrôlée, en fonction de la taille et la forme des particules du pigment, de telle sorte qu'il se forme au moins une couche monomoléculaire sur la surface du pigment.

8. Procédé selon l'une des revendications 6 et 7, caractérisé en ce que l'hydrolyse est réalisée avec une quantité d'eau qui correspond au moins à la proportion stoechiométrique nécessaire à la transformation complète de la couche de silicium organique en une couche en siloxane.

9. Procédé selon l'une des revendications 6 à 8, caractérisé en ce que le catalysateur d'hydrolyse est choisi dans le groupe des acides phosphoniques et des acides phosphoriques.

10. Procédé selon la revendication 9, caractérisé en ce que le catalysateur utilisé est pris dans le groupe des acides 2-carboxyéthanephosphoniques, des acides 2-aminoéthanephosphoniques et des acides octanephosphoniques.

11. Procédé selon l'une quelconque des revendications 6 à 10, caractérisé en ce que le groupement réactif du composé organique de silicium est transformé par polymérisation, polyaddition ou polycondensation avec le ou les composé(s) de faible poids moléculaire formant le revêtement en résine synthétique.

12. Procédé selon l'une quelconque des revendications 6 à 11 caractérisé en ce que l'on utilise pour la transformation avec le groupement réactif du composé organique de silicium, un composé de faible poids moléculaire, qui présente au moins trois groupements fonctionnels permettant la polymérisation, la polyaddition ou la polycondensation.

13. Procédé selon la revendication 12, caractérisé en ce que le composé de faible poids moléculaire présente au moins trois doubles liaisons éthyléniques.

14. Procédé selon la revendication 13, caractérisé en ce que les doubles liaisons éthyléniques sont constituées de groupes acryliques et / ou méthacryliques.

15. Procédé selon la revendication 13, caractérisé en ce que les doubles liaisons éthyléniques sont constituées de groupes allyliques.

16. Procédé selon l'une des revendications 6 à 15, caractérisé en ce que le composé organique de silicium utilisé dans la première étape présente la forme R₄₋ₙSiXₙ, où n peut prendre les valeurs 2 ou 3 et R est un reste organique avec le groupe réactif et X est un substituant hydrolysable ou un groupe hydrolysable.

17. Procédé selon l'une des revendications 11 à 16, caractérisé en ce que le reste organique R comporte au moins une double liaison éthylénique, un groupe amine, mercapto, époxy, hydroxyl ou isocyanate.

18. Procédé selon la revendication 17, caractérisé en ce que le reste organique R comprend un groupe acrylique et /ou méthacrylique.

19. Procédé selon la revendication 16, caractérisé en ce que X représente Cl-, CH₃O-, C₂H₅O-, CH₃COO-, CH₃O (C₂H₄O)₂- ou CH₃OC₂H₄O-.

20. Procédé selon la revendication 16, caractérisé en ce que le composé de faible poids moléculaire est choisi dans les groupes suivants : triméthylolpropane-triméthacrylate, triméthylolpropane-triacrylate, tétraméthylolméthane-triacrylate, tétraméthylolméthane-tétra-acrylate et polylallylglycidyléther.

21. Utilisation d'une poudre métallique selon une ou plusieurs des revendications 1 à 5 ou que l'on peut obtenir à partir d'un procédé selon les revendications 6 à 20, comme composant principal d'une laque, d'une couleur et d'un vernis dans un milieu aqueux.

22. Utilisation d'une poudre métallique selon une ou plusieurs des revendications 1 à 5 ou que l'on peut obtenir à partir d'un procédé selon les revendications 6 à 20 pour des laques pulvérulentes ou liquides destinées à laquage électrostatique.

23. Utilisation d'une poudre métallique selon une ou plusieurs des revendications 1 à 5 ou que l'on peut obtenir à partir d'un procédé selon les revendications 6 à 20 pour teindre des matériaux synthétiques.
